# EUROPÄISCHE PATENTSCHRIFT

(11) **EP 0 632 989 B1**
(45) Veröffentlichungstag und Bekanntmachung des Hinweises auf die Patenterteilung: **06.05.1998**
(21) Anmeldenummer: 94108348.7
(22) Anmeldetag: 31.05.1994
(51) Int. Cl.: A47J 45/07

(54) **Geschirr mit Griffbefestigung**
Vessel comprising a fixation of a grip
Récipient avec une fixation d'une poignée

(30) Priorität: 10.07.1993 DE 4323106
(43) Veröffentlichungstag der Anmeldung: 11.01.1995
(73) Patentinhaber: HEINRICH BAUMGARTEN KG SPEZIALFABRIK FÜR BESCHLAGTEILE, 57290 Neunkirchen (DE)
(72) Erfinder: Baumgarten, Gerd-Diethard, Dipl.-Ing., D-57234 Wilnsdorf-Wilden (DE)
(74) Vertreter: Missling, Arne, Dipl.-Ing.

(56) Entgegenhaltungen:
- DE-A- 2 264 244
- DE-U- 9 216 962
- GB-A- 129 929
- GB-A- 306 455

## Beschreibung

Die Erfindung betrifft ein Geschirr mit Griffbefestigung, insbesondere ein Kochgeschirr aus Druck- oder Spritzguß, mit einem am äußeren Umfang des Geschirrkörpers befestigten Tragsteg, über den ein Griffstück in Richtung auf den Geschirrkörper aufschieb- und arretierbar ist, wobei an dem Tragsteg ein mit diesem einstückiges Haltestück ausgebildet ist, das in einem mit dem Geschirrkörper einstückigen Ansatzstück eingegossen ist, wobei das Ansatzstück in Richtung auf das Griffstück von einer Dichtplatte begrenzt ist, die vor dem Eingießen an dem Haltestück befestigt ist.

Eine derartige Griffbefestigung ist aus der GB-A-129 929 bekannt. Der Tragsteg für die Befestigung des Griffes besteht aus einem Rohr, das in die Topfwandung eingegossen ist. Mit dem Ende des Rohres ist starr ein Griffstück verbunden. Ein Problem bei dieser Auführungsform stellt die Abdichtung des Rohrstückes beim Gießvorgang dar.

Aus der DE-A-22 64 244 ist eine Griffbefestigung bekannt, wobei sich bei der Anwendung einer solchen Anordnung auf - etwa aus einer Aluminiumlegierung - gegossene Kochgeschirre oder dergleichen Probleme bei der Befestigung des Tragsteges an dem Geschirr ergeben. Zumeist wird am Umfang des Geschirrs ein spezieller Haltebügel eingegossen, an dem später der Tragsteg entweder angeschweißt oder angeschraubt wird. Es versteht sich, daß eine genaue Orientierung des Haltebügels in Bezug auf das Geschirr während des Gießprozesses schwierig ist. Es besteht zudem die Gefahr, daß der Haltebügel beim Einlaufen der Gießmasse weggeschwemmt wird, weil auch seine Befestigung in der Gießform schwierig zu handhaben ist. Fehlabgüsse sind die unausweichliche Folge.

Wird der Tragsteg mit einem eingegossenen Haltebügel verschweißt, dann kann es zu Verspannungen und/oder Verformungen des Werkstückes kommen, so daß zulässige Abmessungen nicht mehr eingehalten werden. Dies ist besonders unangenehm in einer Massenfertigung, bei der die folgenden Arbeitsvorrichtungen auf bestimmte Abmessungen der Werkstücke eingerichtet sind. Auch dieser Arbeitsvorgang birgt also die Gefahr, daß die dabei hergestellten Halbfertigfabrikate - in einer Fertigungslinie - nicht weiterverarbeitet werden können.

Eine Befestigung des Tragsteges mittels einer Schraubverbindung, gleichgültig ob direkt an dem Geschirr oder an einem angegossenen Haltebügel, ist arbeitsaufwendig und garantiert außerdem keine feste Verbindung, insbesondere über einen langen Zeitraum.

In der nicht vorveröffentlichten DE-A-43 03 710 ist hingegen eine Griffbesfestigung beschrieben, bei der auf einen Haltebügel völlig verzichtet ist. Stattdessen ist an dem Geschirr eine in Gebrauchslage senkrechte Anschlagplatte mit Führungsnuten angegossen und der Tragsteg mit in die Führungsnuten einschiebbaren Führungsleisten versehen. Die Führungsleisten werden dabei bis zu geeigneten Anschlägen und gegebenenfalls mittels einer Preßeinrichtung eingeführt, so daß auf diese Weise eine reibschlüssige Verbindung entsteht. Anschließend wird das Griffstück montiert.

Die Erfindung hat sich die Aufgabe gestellt, ein Geschirr der eingangs näher bezeichneten Art so auszubilden, daß weder ein an dem Geschirr separat einzugießender Haltebügel vorgesehen ist, an welchem der Tragsteg zu befestigen wäre, noch daß für eine solche Befestigung ein spezieller Arbeitsschritt erforderlich ist, wobei gleichzeitig sichergestellt ist, daß das Befestigungsteil beim Gießvorgang sicher gehalten ist und zusätzliche Gießformabdichtungen entbehrlich sind.

Erfindungsgemäß wird die Aufgabe dadurch gelöst, daß das Haltestück von mindestens einem in Gebrauchslage des Geschirrkörpers im wesentlichen senkrecht stehenden Stegteil mit flächiger Kontur gebildet wird.

Die Erfindung vermeidet demzufolge sowohl einen Haltebügel als auch die umständliche Montage des Tragsteges an einem Anguß des Geschirrs. Dabei kann aber das Haltestück im Gegensatz zu dem vorbekannten Haltebügel während des Gießprozesses auch nicht weggeschwemmt werden, weil es Teil des Tragsteges ist, dessen übriger Bereich außerhalb der Gießform verbleibt und auf diese Weise bequem arretierbar ist.

Das Haltestück wird von mindestens einem in Gebrauchslage des Geschirrs im wesentlichen senkrechten Stegteil des Tragsteges gebildet; dieses kann dadurch an die üblicherweise wegen des in Gebrauchslage des Geschirrs erforderlichen senkrechten Stegbleche des Tragsteges, einstückig mit diesen, anschließen. Es wird in einfacher Weise als Blechteil ausgebildet. Um bei einer solchen Ausführung zu verhindern, daß beim Gebrauch des Geschirrs ein Stegteil aus dem Ansatzstück herausgerissen wird, ist vorzugsweise vorgesehen, daß mindestens eine der ebenen, einer Achse des Griffstückes etwa parallelen Oberflächen des Stegteiles mindestens eine Ausnehmung aufweist. Die Ausnehmung ist dabei zweckmäßig als Durchbrechung des Stegteiles ausgebildet. Auf diese Weise ist das Haltestück formschlüssig sicher in dem Ansatzstück verankert, weil die Ausnehmung beziehungsweise die Durchbrechung mit Gießmasse ausgefüllt ist.

Gemäß der Erfindung ist das Ansatzstück in Richtung auf das Griffstück von einer Dichtplatte begrenzt, die vor dem Eingießen an dem Haltestück befestigt ist. Die Dichtplatte ist auf diese Weise Teil der Gießform und verhindert das Eindringen von Gießmasse in den übrigen Bereich des Tragsteges, der zumindest teilweise von dem Griffstück überfangen werden soll. Dabei trennt die Dichtplatte zweckmäßig das Ansatzstück von einem von dem Griffstück nicht überdeckten Bereich des Tragsteges.

Im einzelnen kann es günstig sein, wenn die Dichtplatte mindestens eine Durchbrechung aufweist, in welche das Haltestückes einführbar ist, und wenn darüberhinaus das Haltestück so ausgebildet ist, daß es die Durchbrechung ausfüllt, wenn es in diese eingeführt ist. Die weitgehende Kongruenz der Querschnitte der Durchbrechung und des Haltestückes sorgt dafür, daß die Gießmasse an der Dichtplatte im wesentlichen zum Stehen kommt und nicht in die anderweitig benötigten Bereiche des Tragsteges gelangt.

Das Haltestück wird in Bezug auf das Ansatzstück beispielsweise dadurch orientiert, daß ein seine Einführung in die Durchbrechung begrenzender, an die Dichtplatte stoßender Anschlag vorgesehen ist und/oder das an die Dichtplatte anschlagende Haltestück in dieser Lage arretierbar ist, in einfacher Weise dadurch, daß das Haltestück auf der dem Ansatzstück zugewandten Seite der Dichtplatte mit mindestens einem Prägelappen oder dergleichen so versehen wird, daß dieser an der Dichtplatte anliegend die Außenkontur der Durchbrechung überragt. Es ergibt sich so eine sehr starre Verbindung des Haltestückes und damit des Tragsteges mit dem Ansatzstück und damit dem Geschirr, die hoch belastbar ist, ohne daß dabei ihre Zerstörung zu befürchten wäre.

Eine ästhetisch besonders befriedigende Gestaltung der erfindungsgemäßen Griffbefestigung ergibt sich, wenn die Dichtplatte gewölbt als Segment eines kreisförmigen Hohlzylinders ausgeführt ist in der Form, daß ein auf die Symmetrieachse des Geschirrs bezogener Wölbungsradius vorgesehen und ferner gegebenenfalls die Berandung der Dichtplatte in Gießmasse eingebettet ist. Damit kann auf eine Verkleidung des Ansatzstückes verzichtet werden.

Die Anordnung kann in einfacher Weise so erfolgen, daß das Griffstück auf dem Tragsteg mittels eines Federstückes arretierbar ist, und/oder daß eine Hülse zur Verkleidung eines von dem Griffstück nicht überdeckbaren, an das Ansatzstück anschließenden Bereiches der Griffbefestigung vorgesehen ist. Die Arbeiten zum Zusammenbau der Griffbefestigung reduzieren sich also möglicherweise auf das Aufstecken des Feder- und des Griffstückes und das Aufbringen der Hülse. Eine solche einfache Montage ist mit den bisher bekannten Anordnungen nicht erreichbar.

Die Erfindung wird nachstehend anhand der Zeichnung an einem Ausführungsbeispiel näher erläutert. Es zeigen
- Fig.1: ein erfindungsgemäßes Geschirr im mittigen Längsschnitt,
- Fig.2: eine Draufsicht auf Fig.1, teilweise geschnitten, und
- Fig.3 bis Fig.5: einen erfindungsgemäßen Tragsteg in Vorder- und Seitenansicht sowie in Draufsicht,
sämtlich in schematischer Darstellung.

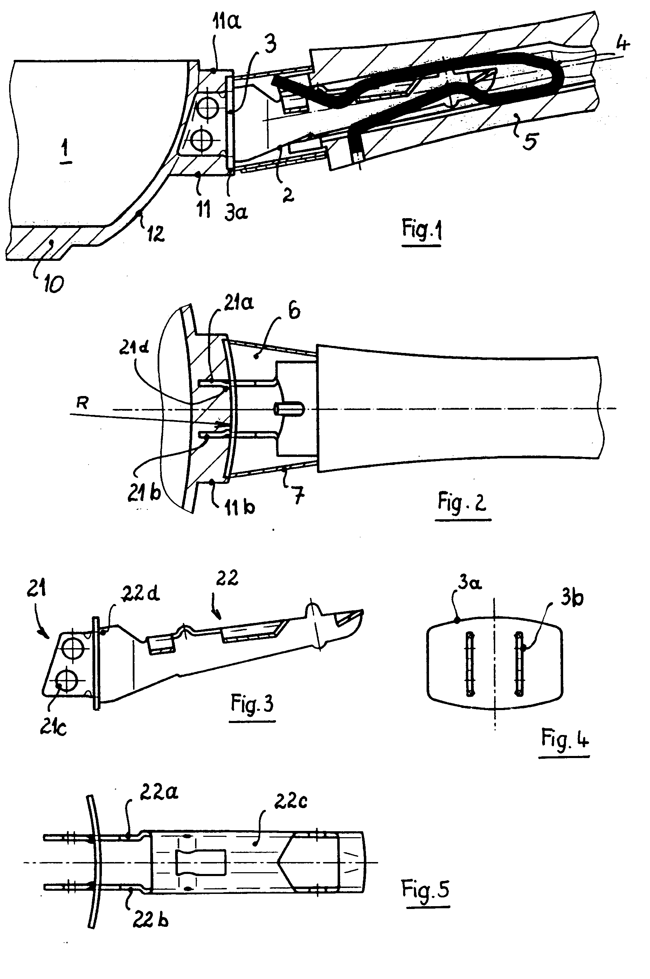

Ein erfindungsgemäßes Geschirr 1 besteht entsprechend Fig.1 im wesentlichen aus einem Ansatzstück 11 des Geschirrs 1, einem Tragsteg 2, einer Dichtplatte 3, einem Federstück 4 und einem Griffstück 5.

Das Ansatzstück 11 ist an einer Außenkontur 12 des Geschirrs 1 vorgesehen und besteht einstückig mit dem Geschirr 1 wie dieses aus Gießmasse 10.

In das Ansatzstück 11 ist (Fig.3) ein Haltestück 21 des Tragsteges 2 eingegossen. Das Haltestück 21 besteht (Fig.2) aus zwei Stegteilen 21a und 21b, die als Bleche ausgebildet sind und bei Gebrauchslage des Geschirrs 1 etwa senkrecht stehen, wobei deren flächige Kontur ungefähr dem Querschnitt des Ansatzstückes 11 angepaßt ist, ohne dessen Randflächen 11a und 11b zu erreichen.

Die Stegteile 21a und 21b sind einstückige Teile von Stegblechen 22a und 22b des Tragsteges 2, die zusammen mit einem verbindenden Gurt 22c dessen Korpus 22 bilden. Der Korpus 22 ist mit mehreren Anschlägen, Durchrissen und Führungen versehen, mit deren Hilfe das hier drahtförmige Federstück 4 so befestigbar ist, daß das Griffstück 5 zumindest teilweise, den Tragsteg 2 überfangend, auf diesen aufschieb- und lösbar arretierbar ist; die Einzelheiten hierzu stehen in keinem unmittelbaren Zusammenhang mit der Erfindung und sind dem Fachmann geläufig, so daß auf eine diesbezügliche Erörterung verzichtet werden kann. In der Zeichnung ist aber zu erkennen, daß ein von dem Griffstück 5 nicht überfangener Bereich 6 der Griffbefestigung von einer Hülse 7 verdeckt ist, so daß die dort sonst sichtbaren Teile des Tragsteges 2 und des Federstückes 4 während des Gebrauchs des Geschirrs 1 ebenfalls verkleidet sind.

Die Dichtplatte 3 schließt das Ansatzstück 11 in Richtung auf den Bereich 6 ab. Sie ist gewölbt ausgebildet mit einem Wölbungsradius R um die außerhalb der Zeichenfläche befindliche Symmetrieachse (zumeist Rotationsachse) des Geschirrs 1. In den Fig.1 und 2 ist zu erkennen, daß die Berandung 3a der Dichtplatte 3 von einer Kante der Gießmasse 10 eingebettet ist, so daß eine stabile und formschöne Orientierung der Dichtplatte 3 entsteht.

In der Dichtplatte 3 befinden sich zwei Durchbrechungen 3b, wie das am besten in der Fig.4 zu erkennen ist; sie sind dem Querschnitt der durch sie hindurchgesteckten Stegteile 21a und 21b angepaßt, so daß kein Zwischenraum verbleibt, durch den beim Vergießen des Haltestückes 21 Gießmasse 10 in den Bereich 6 eindringen kann.

Zur Verankerung der Stegteile 21a und 21b sind in ihnen Durchbrechungen 21c eingebracht, die während des Gusses mit Gießmasse 10 verfüllt werden.

Besonders in der Fig.3 sind Anschläge 22d zu erkennen, die an den Stegblechen 22a und 22b ausgebildet sind und dafür sorgen, daß diese nicht beliebig weit in die Durchbrechungen 3a eingeschoben werden können. Andererseits dienen mehrere nach dem Einstecken des Haltestückes 2 in die Dichtplatte 3 in den Stegteilen 21a und 21b erzeugte Prägelappen 21d dazu, daß die Dichtplatte 3 arretiert und von dem Haltestück 2, insbesondere vor deren Eingießen in das Ansatzstück 11, nicht wieder entfernt werden kann (Fig. 2).

## Patentansprüche

1. Geschirr mit Griffbefestigung, insbesondere ein Kochgeschirr aus Druck- oder Spritzguß, mit einem am äußeren Umfang des Geschirrkörpers (1) befestigten Tragsteg (2), über den ein Griffstück (5) in Richtung auf den Geschirrkörper (1) aufschieb- und arretierbar ist, wobei an dem Tragsteg (2) ein mit diesem einstückiges Haltestück (21) ausgebildet ist, das in einem mit dem Geschirrkörper (1) einstückigen Ansatzstück (11) eingegossen ist, wobei das Ansatzstück (11) in Richtung auf das Griffstück (5) von einer Dichtplatte (3) begrenzt ist, die vor dem Eingießen an dem Haltestück (21) befestigt ist, dadurch gekennzeichnet, daß das Haltestück (21) von mindestens einem in Gebrauchslage des Geschirrkörpers (1) im wesentlichen senkrecht stehenden Stegteil (21a,21b) mit flächiger Kontur gebildet wird.

2. Geschirr nach Anspruch 1, dadurch gekennzeichnet, daß das Stegteil (21a,21b) als Blechteil ausgebildet ist.

3. Geschirr nach Anspruch 2, dadurch gekennzeichnet, daß mindestens eine der ebenen, einer Achse des Griffstückes (5) etwa parallelen Oberflächen des Stegteiles (21a,21b) mindestens eine Ausnehmung aufweist.

4. Geschirr nach Anspruch 3, dadurch gekennzeichnet, daß die Ausnehmung als Durchbrechung (21c) des Stegteiles (21a,21b) ausgebildet ist.

5. Geschirr nach einem der Ansprüche 1 bis 4, dadurch gekennzeichnet, daß die Dichtplatte (3) das Ansatzstück (11) von einem von dem Griffstück (5) nicht überdeckten Bereich (6) des Tragsteges (2) trennt.

6. Geschirr nach Anspruch 5, dadurch gekennzeichnet, daß die Dichtplatte (3) mindestens eine Durchbrechung (3b) aufweist, in welche das Haltestück (21) einführbar ist.

7. Geschirr nach Anspruch 6, dadurch gekennzeichnet, daß das Haltestück (21) so ausgebildet ist, daß es die Durchbrechung (3b) ausfüllt, wenn es in diese eingeführt ist.

8. Geschirr nach einem der Ansprüche 5 bis 7, dadurch gekennzeichnet, daß an dem Haltestück (21) ein seine Einführung in die Durchbrechung (3b) begrenzender, an die Dichtplatte (3) stoßender Anschlag (22d) vorgesehen ist.

9. Geschirr nach Anspruch 8, dadurch gekennzeichnet, daß das an die Dichtplatte (3) anschlagende Haltestück (21) in dieser Lage arretierbar ist.

10. Geschirr nach Anspruch 9, dadurch gekennzeichnet, daß das Haltestück (21) auf der dem Ansatzstück (11) zugewandten Seite der Dichtplatte (3) mit mindestens einem Prägelappen (21d) oder dergleichen so versehen wird, daß dieser, an der Dichtplatte (3) anliegend, die Außenkontur der Durchbrechung (3b) überragt.

11. Geschirr nach einem der Ansprüche 5 bis 10, dadurch gekennzeichnet, daß die Dichtplatte (3) gewölbt als Segment eines kreisförmigen Hohlzylinders ausgeführt ist, in der Form, daß ein auf die Symmetrieachse des Geschirrs (1) bezogener Wölbungsradius (R) vorgesehen ist.

12. Geschirr nach einem der Ansprüche 5 bis 11, dadurch gekennzeichnet, daß die Berandung (3a) der Dichtplatte (3) in Gießmasse (10) eingebettet ist.

13. Geschirr nach einem der Ansprüche 1 bis 12, dadurch gekennzeichnet, daß das Griffstück (5) auf dem Tragsteg (2) mittels eines Federstückes (4) arretierbar ist.

14. Geschirr nach einem der Ansprüche 1 bis 13, dadurch gekennzeichnet, daß eine Hülse (7) zur Verkleidung eines von dem Griffstück (5) nicht überdeckbaren, an das Ansatzstück (11) anschließenden Bereiches (6) der Griffbefestigung vorgesehen ist.

## Claims

1. A utensil with a handle fastening, in particular a cooking utensil of die-cast or injection-moulded metal, with a support frame (2) which is secured to the outer periphery of the utensil body (1) and by way of which a handle member (5) can be pushed on in the direction of the utensil body (1) and can be locked, wherein the support frame (2) has a holding member (21) formed thereon which is integral therewith and which is cast in an attachment member (11) integral with the utensil body (1), and wherein the attachment member (11) is bounded in the direction of the handle member (5) by a sealing plate (3) which is secured to the holding member (21) before casting-in, **characterized in that** the holding member (21) is formed by at least one frame part (21a, 21b) with a flat contour which is substantially upright in the position of use of the utensil body (1).

2. A utensil according to Claim 1, **characterized in that** the frame part (21a, 21b) is formed as a sheet-metal part.

3. A utensil according to Claim 2, **characterized in that** at least one of the flat surfaces of the frame part (21a, 21b) approximately parallel to an axis of the handle member (5) has at least one recess.

4. A utensil according to Claim 3, **characterized in that** the recess is formed as an opening (21c) in the frame part (21a, 21b).

5. A utensil according to one of Claims 1 to 4, **characterized in that** the sealing plate (3) separates the attachment member (11) from a region (6) of the support frame (2) not covered by the handle member (5).

6. A utensil according to Claim 5, **characterized in that** the sealing plate (3) has at least one aperture (3b) into which the holding member (21) can be inserted.

7. A utensil according to Claim 6, **characterized in that** the holding member (21) is formed in such a way that it fills the aperture (3b) when it is inserted into it.

8. A utensil according to one of Claims 5 to 7, **characterized in that** a stop (22d), which limits the insertion of the holding member (21) into the aperture (3b) and which strikes against the sealing plate (3), is provided on the said holding member (21).

9. A utensil according to Claim 8, **characterized in that** the holding member (21) which strikes against the sealing plate (3) can be locked in this position.

10. A utensil according to Claim 9, **characterized in that** on the side of the sealing plate (3) facing the attachment member (11) the holding member (21) is provided with at least one stamped tab (21d) or the like in such a way that the said stamped tab (21d), resting against the sealing plate (3), projects beyond the outer contour of the aperture (3b).

11. A utensil according to one of Claims 5 to 10, **characterized in that** the sealing plate (3) is formed in a curved manner as a segment of a circular hollow cylinder, in such a way that a radius of curvature (**R**) with respect to the axis of symmetry of the utensil is provided.

12. A utensil according to one of Claims 5 to 11, **characterized in that** the periphery (3a) of the sealing plate (3) is embedded in cast material (10).

13. A utensil according to one of Claims 1 to 12, **characterized in that** the handle member (5) can be locked on the support frame (3) by means of a spring member (4).

14. A utensil according to one of Claims 1 to 13, **characterized in that** a sleeve (7) is provided for covering a region (6) of the handle fastening which cannot be covered by the handle member (5) and which joins the attachment part (11).

## Revendications

1. Ustensile de cuisine avec fixation de manche, en particulier ustensile de cuisson en fonte coulée sous pression ou par injection, comportant une âme porteuse (2) fixée à la périphérie extérieure du corps (1) de l'ustensile, sur laquelle une pièce formant manche (5) peut être enfilée en direction du corps (1) de l'ustensile et bloquée, une pièce de fixation (21) étant formée sur la pièce formant âme porteuse (2), en étant d'une seule pièce avec celle-ci, et coulée dans une pièce de raccordement (11) monobloc avec le corps (1) de l'ustensile, la pièce de raccordement (11) étant limitée en direction du manche (5) par une plaque d'étanchéité (3), qui est fixée à la pièce de fixation (21) avant la coulée,
caractérisé en ce que la pièce de fixation (21) est formée d'au moins un talon plat (21a, 21b) orienté, sensiblement verticalement en position d'utilisation du corps (1) de l'ustensile.

2. Ustensile selon la revendication 1, caractérisé en ce que le talon (21a, 21b) est formée d'une pièce en tôle.

3. Ustensile selon la revendication 2, caractérisé en ce que l'une au moins des surfaces planes du talon (21a, 21b) orientées à peu près parallèlement à un axe de la pièce formant âme (5) comporte au moins un évidement.

4. Ustensile selon la revendication 3, caractérisé en ce que l'évidement a la forme d'un trou (21c) traversant le talon de part en part.

5. Ustensile selon l'une des revendications 1 à 4, caractérisé en ce que la plaque d'étanchéité (3) sépare la pièce de raccordement (11) d'une zone (6) de la pièce formant âme porteuse (2) non recouverte par la pièce formant manche (5).

6. Ustensile selon la revendication 5, caractérisé en ce que la plaque d'étanchéité (3) comporte au moins une découpe (3b), dans laquelle peut être introduite la pièce de fixation (21).

7. Ustensile selon la revendication 6, caractérisé en ce que la pièce de fixation (21) a une forme telle qu'elle remplit la découpe (3b), lorsqu'elle y est introduite.

8. Ustensile selon l'une des revendications 5 à 7, caractérisé en ce qu'il est prévu, sur la pièce de fixation (21), une butée (22d) butant contre la plaque d'étanchéité (3), en limitant l'introduction de cette pièce dans la découpe (3b).

9. Ustensile selon la revendication 8, caractérisé en ce que la pièce de fixation (21) butant contre la plaque d'étanchéité (3) peut être bloquée dans cette position.

10. Ustensile selon la revendication 9, caractérisé en ce que la pièce de fixation (21) est pourvue, sur le côté de la plaque d'étanchéité (3) tourné vers la pièce de raccordement (11), d'au moins une languette estampée (21d) ou analogue, de telle manière que celle-ci, en portant bien sur la plaque d'étanchéité, dépasse du contour extérieur de la découpe (3b).

11. Ustensile selon l'une des revendications 5 à 10, caractérisé en ce que la plaque d'étanchéité (3) est exécutée bombée comme segment d'un cylindre creux circulaire, dans la forme correspondant à un rayon de bombé (R) rapporté à l'axe de symétrie de l'ustensile (1).

12. Ustensile selon l'une des revendications 5 à 11, caractérisé en ce que le bord (3a) de la plaque d'étanchéité (3) est encastré dans la masse de coulée (10).

13. Ustensile selon l'une des revendications 6 à 12, caractérisé en ce que la pièce formant manche (5) peut être bloquée sur la pièce formant âme porteuse (2) au moyen d'une pièce formant ressort (4).

14. Ustensile selon l'une des revendications 1 à 13, caractérisé en ce qu'il est prévu une douille (7) pour capoter une zone (6) de la fixation du manche qui est adjacente à la pièce de raccordement (11) et qui ne peut pas être recouverte par la pièce formant manche (5).
